# EUROPEAN PATENT APPLICATION

(11) **EP 2 811 489 A1**
(43) Date of publication of application: **10.12.2014**
(21) Application number: 12867411.6
(22) Date of filing: 25.12.2012
(51) Int. Cl.: H01B 7/295, C08K 5/521, C08L 23/06, C08L 53/02, C08L 71/12, H01B 3/44, H01B 7/02

(54) **HALOGEN-FREE FLAME-RETARDANT INSULATED ELECTRICAL WIRE**

(30) Priority: 03.02.2012 JP 2012021401
(71) Applicant: Sumitomo Electric Industries, Ltd., Osaka-shi, Osaka 541-0041 (JP)
(72) Inventor: MAYAMA, Yuhei, Osaka 554-0024 (JP); NISHIKAWA, Shinya, Osaka 554-0024 (JP); ISHIKAWA, Masayuki, Tochigi 322-8585 (JP); TOZAWA, Masahiro, Tochigi 322-8585 (JP)
(74) Representative: Boult Wade Tennant
(86) International application number: PCT/JP2012/083389
(87) International publication number: WO 2013/114765

(57) **Abstract**

Provided is a halogen-free insulated electrical wire that meets the requirements for an insulated electrical wire for automobiles, such as oil resistance and flame retardancy, and that can combine good abrasion resistance with high flexibility (elongation) of a coating film.

The halogen-free flame-retardant insulated electrical wire includes a conductor and an insulating layer that covers the conductor. In the halogen-free flame-retardant insulated electrical wire, the insulating layer is composed of a cross-linked product of a resin composition that contains 6 to 25 parts by mass of a phosphoric acid ester and 1 to 10 parts by mass of a multifunctional monomer relative to 100 parts by mass of a resin component containing 40 to 65 parts by mass of a high-density polyethylene having a melt flow rate of 0.60 or less, 25 to 30 parts by mass of a polyphenylene ether-based resin, and 10 to 30 parts by mass of styrene-based elastomer, the resin component being a polymer alloy in which the polyphenylene ether-based resin and the styrene-based elastomer are finely dispersed in the high-density polyethylene.

## Description

### Technical Field

The present invention relates to a halogen-free flame-retardant insulated electrical wire that has good abrasion resistance and good heat resistance, and that can be particularly suitably used in wiring in automobiles.

### Background Art

Insulated electric wires used in internal wiring of automobiles are exposed to vibrations, high temperatures, cold, and wind and rain, and thus reliability is required in which a stable performance can be achieved even under such adverse conditions. Specifically, in Japan Automobile Standard Organization standards (JASO standards) and International Standard Organization (ISO) standards, which are international standards, acceptability criteria regarding abrasion resistance, oil resistance, flame retardancy, mechanical properties (such as tensile elongation and strength) of an insulating coating, heat resistance, and the like are specified in detail.

Furthermore, in recent years, in order to reduce the effect on the environmental load, a so-called halogen-free insulating material that does not contain polyvinyl chloride (PVC) or a halogen-based flame retardant has been desired for an insulating coating. In general, a material produced by adding a halogen-free flame retardant such as magnesium hydroxide, aluminum hydroxide, or a nitrogen-based flame retardant to an insulating resin such as a polyolefin resin is used as a covering material of a halogen-free electrical wire. However, in order to meet the requirements for flame retardancy, it is necessary to add such a halogen-free flame retardant in a larger amount than a halogen-based flame retardant. Consequently, the flexibility of the resulting insulating coating decreases, resulting in a problem of a decrease in the initial tensile elongation and the tensile elongation after a heat aging resistance test.

In order to solve the above problem, PTL 1 discloses a halogen-free flame-retardant resin composition that includes a resin component containing a polyamide resin or a polyester resin, a polyphenylene ether-based resin, and a styrene-based elastomer resin, and a nitrogen-based flame retardant. This flame-retardant resin composition is a polymer alloy having a sea-island structure in which the polyphenylene ether-based resin, which has a high modulus of elasticity at room temperature and is hard, forms islands and the styrene-based elastomer, which has a high elongation and is soft, forms a sea. Furthermore, the polyamide resin or the polyester resin, which is a crystalline polymer and which can retain an appropriate modulus of elasticity and maintain the flexibility and extensibility even at a temperature equal to or higher than the glass transition temperature thereof, is uniformly dispersed in the styrene-based elastomer, and thus flame retardancy and the flexibility substantially the same as those of PVC can be obtained.

PTL 2 describes a flame-retardant resin composition that includes a base polymer containing a polyphenylene ether-based resin and a styrene-based thermoplastic elastomer, a phosphorus-based compound and a nitrogen-based organic compound that function as flame retardants, and a multifunctional monomer. In this flame-retardant resin composition, good flame retardancy and a good tensile property (elongation) can be combined and a cross-linking effect can be further obtained. Furthermore, PTL 3 discloses a halogen-free flame-retardant electrical wire for automobiles, the electrical wire having a long-term chemical resistance to gasoline.

### Citation List

### Patent Literature

PTL 1: Japanese Unexamined Patent Application Publication No. 2008-169234
PTL 2: Japanese Unexamined Patent Application Publication No. 2009-249552
PTL 3: Japanese Unexamined Patent Application Publication (Translation of PCT Application) No. 2010-502479

### Summary of Invention

### Technical Problem

With the recent increase in the need for a reduction in the weight and realization of space saving, the characteristics required for electrical wires for automobiles have become very strict. Characteristics that are particularly focused on are abrasion resistance and the flexibility of a coating film, and the flame-retardant electrical wires described above cannot satisfy all the requirements.

For example, all the flame-retardant electrical wires described in PTL 1 do not satisfy a characteristic that the elongation of a coating film is 150% or more, which is generally required. In addition, no specific evaluation results of abrasion resistance are described. Regarding the flame-retardant resin composition described in PTL 2, the elongations of all coating films are 150% or more. However, abrasion resistance of the coating films is not specifically described. Furthermore, insulated electrical wires described in PTL 3 have low initial elongations. The use of a material which has a high modulus of elasticity and is hard, for example, a polyphenylene ether-based resin, improves abrasion resistance, but such a material has a low elongation. Therefore, it is difficult to combine good abrasion resistance and high elongation.

In view of the above circumstances, an object of the present invention is to provide a halogen-free insulated electrical wire that meets the requirements for an insulated electrical wire for automobiles, such as oil resistance and flame retardancy, and that can combine good abrasion resistance with high flexibility (elongation) of a coating film. Solution to Problem

The present invention provides a halogen-free flame-retardant insulated electrical wire including a conductor and an insulating layer that covers the conductor. In the halogen-free flame-retardant insulated electrical wire, the insulating layer is composed of a cross-linked product of a resin composition that contains 6 to 25 parts by mass of a phosphoric acid ester and 1 to 10 parts by mass of a multifunctional monomer relative to 100 parts by mass of a resin component containing 40 to 65 parts by mass of a high-density polyethylene having a melt flow rate of 0.60 or less, 25 to 30 parts by mass of a polyphenylene ether-based resin, and 10 to 30 parts by mass of styrene-based elastomer, the resin component being a polymer alloy in which the polyphenylene ether-based resin and the styrene-based elastomer are finely dispersed in the high-density polyethylene.

In order to satisfy abrasion resistance required for the ISO standards, both high abrasion resistance and high flexibility can be achieved by using a polyphenylene ether-based resin, which is a hard material, and a styrene-based elastomer, which is a flexible component, and forming a polymer alloy in which the polyphenylene ether-based resin and the styrene-based elastomer are finely dispersed in a high-density polyethylene having a relatively high molecular weight, namely, a melt flow rate of 0.60 or less. A phosphoric acid ester contributes to the improvement in flame retardancy and has an effect of plasticizing the polyphenylene ether-based resin, thus contributing to the improvement in the elongation (flexibility) of the resin composition. Since such an insulating layer is provided, an insulated electrical wire having high flexibility, high abrasion resistance, and high flame retardancy can be obtained.

The phosphoric acid ester is preferably a condensed phosphoric acid ester. In particular, bisphenol A bis-diphenyl phosphate, which has good heat resistance and good hydrolysis resistance, is preferable. Bisphenol A bis-diphenyl phosphate is available as CR-741 (trade name) manufactured by Daihachi Chemical Industry Co., Ltd.

The high-density polyethylene preferably has a melt flow rate of 0.15 or more and 0.30 or less. The lower the melt flow rate, the higher the mechanical strength and the better the abrasion resistance. However, when the melt flow rate is lower than 0.15, extrudability decreases. Note that the melt flow rate is a value (g/10 min) measured at 230°C with a load of 2.16 kgf in accordance with JIS K 7210.

The resin composition is preferably cross-linked by irradiation with ionizing radiation. The cross-linking of the resin composition by irradiation with ionizing radiation improves heat resistance, oil resistance, and mechanical strength.

In addition, the present invention provides the insulated electrical wire, in which the conductor has a cross-sectional area of 0.35 mm² or less, and the insulating layer has a thickness of 0.25 mm or less. Since the insulated electrical wire of the present invention has good abrasion resistance, the requirements can be satisfied even when the insulating layer is a thin film having a thickness of 0.25 mm or less.

### Advantageous Effects of Invention

According to the present invention, it is possible to obtain a halogen-free insulated electrical wire that meets the requirements for an insulated electrical wire for automobiles, such as oil resistance and flame retardancy, and that can combine good abrasion resistance with high flexibility (elongation) of a coating film.

### Description of Embodiments

First, various materials used in a resin composition for forming an insulating layer will be described. A high-density polyethylene is a homopolyethylene or a polyethylene copolymer, and is a polyethylene having a density of 0.942 g/cm³ or more. A high-density polyethylene having a melt flow rate (hereinafter abbreviated as "MFR", measured at 230°C with a load of 2.16 kgf in accordance with JIS K 7210, unit: g/10 min) of 0.60 or less, preferably 0.15 or more and 0.30 or less is selected. The MFR is an index of an average molecular weight of a high-density polyethylene. In general, the higher the average molecular weight, the lower the MFR. In addition, as the MFR becomes low, the abrasion resistance also tends to relatively improve. In the present invention, abrasion resistance of an insulated electrical wire can be improved by selecting a high-density polyethylene having an MFR of 0.60 or less.

The content of the high-density polyethylene is 40 to 65 parts by mass relative to 100 parts by mass of the total of the resin component. When the content of the high-density polyethylene is less than 40 parts by mass, in a polymer alloy of three components, namely, the high-density polyethylene, a polyphenylene ether-based resin, and a styrene-based elastomer, it is difficult to form a polymer alloy in which the polyphenylene ether-based resin and the styrene-based elastomer are finely dispersed in the high-density polyethylene, and abrasion resistance decreases. When the content of the high-density polyethylene exceeds 65 parts by mass, flame retardancy decreases.

Polyphenylene ether (PPE) is an engineering plastic obtained by oxidative polymerization of 2,6-xylenol synthesized by using methanol and phenol as raw materials. In addition, in order to improve formability of polyphenylene ether, various materials produced by melt-blending polystyrene with polyphenylene ether are commercially available as modified polyphenylene ether (modified PPE) resins. As the polyphenylene ether-based resin used in the present invention, both a simple polyphenylene ether resin and a polyphenylene ether resin produced by melt-blending polystyrene can be used. A polyphenylene ether resin in which a carboxylic acid such as maleic anhydride is introduced may be blended, as required.

A polyphenylene ether resin produced by melt-blending polystyrene is preferably used as the polyphenylene ether-based resin from the standpoint of improving workability when the polyphenylene ether-based resin is melt-mixed with a high-density polyethylene and a styrene-based elastomer. Furthermore, such a polyphenylene ether resin produced by melt-blending polystyrene has good compatibility with a styrene-based elastomer, and thus extrudability is improved.

The content of the polyphenylene ether-based resin is 25 to 30 parts by mass relative to 100 parts by mass of the total of the resin component. The polyphenylene ether-based resin is a hard material having good heat resistance and a high modulus of elasticity. Therefore, when the content of the polyphenylene ether-based resin exceeds 30 parts by mass, the flexibility decreases. When the content of the polyphenylene ether-based resin is less than 25 parts by mass, heat resistance and abrasion resistance decrease. Furthermore, the polyphenylene ether-based resin has high flame retardancy. Therefore, when the content of the polyphenylene ether-based resin is less than 25 parts by mass, flame retardancy decreases.

Examples of the styrene-based elastomer include styrene/ethylene-butene/styrene copolymers, styrene/ethylene-propylene/styrene copolymers, styrene/ethylene/ethylenepropylene/styrene copolymers, styrene/butylene/styrene copolymers, and hydrogenated polymers and partially hydrogenated polymers of any of these copolymers. A styrene-based elastomer in which a carboxylic acid such as maleic anhydride is introduced may be blended, as required.

Among these, the use of a block-copolymerized elastomer of styrene and a rubber component improves extrudability, and improves the tensile elongation at break to improve the flexibility. Examples of the styrene-based elastomer that can be preferably used include styrene/ethylene-butene/styrene block copolymers (SEBS) which have a ratio styrene/ethylene-butylene of 30:70 to 60:40, styrene/ethylene-butylene/ethylene block copolymers (SEBC), and styrene/ethylene-ethylene-propylene/styrene block copolymers (SEEPS).

The content of the styrene-based elastomer is 10 to 30 parts by mass relative to 100 parts by mass of the total of the resin component. When the content of the styrene-based elastomer is less than 10 parts by mass, the flexibility decreases. When the content of the styrene-based elastomer exceeds 30 parts by mass, abrasion resistance decreases.

Examples of a phosphoric acid ester that can be used include bisphenol A bis-diphenyl phosphate, resorcinol bis-dixylenyl phosphate, resorcinol bis-diphenyl phosphate, triphenyl phosphate, triphenyl phosphate, trimethyl phosphate, triethyl phosphate, tricresyl phosphate, trixylenyl phosphate, cresyl phenyl phosphate, cresyl 2,6-xylenyl phosphate, 2-ethylhexyldiphenyl phosphate, 1,3-phenylene bis(diphenyl phosphate), 1,3-phenylene bis(di-2,6-xylenyl phosphate), bisphenol A bis(diphenyl phosphate), octyl diphenyl phosphate, diethylene ethyl ester phosphate, dihydroxy propylene butyl ester phosphate, ethylene disodium ester phosphate, t-butylphenyl diphenyl phosphate, bis-(t-butylphenyl) phenyl phosphate, tris-(t-butylphenyl) phosphate, isopropyl phenyl diphenyl phosphate, bis-(isopropyl phenyl) diphenyl phosphate, tris-(isopropyl phenyl) phosphate, tris-(2-ethylhexyl) phosphate, tris(butoxyethyl) phosphate, and tris-isobutyl phosphate.

The phosphoric acid ester functions as a flame retardant. The use of a phosphoric acid ester having a high phosphorus content improves flame retardancy. A phosphoric acid ester having a high molecular weight and a high melting point has high hydrolysis resistance. Therefore, the decomposition of such a phosphoric acid ester by heat during mixing of the resin composition is suppressed, and flame retardancy is improved. In view of the above points, a condensed phosphoric acid ester is preferable. In particular, bisphenol A bis-diphenyl phosphate is preferably used because it has high hydrolysis resistance and a high plasticizing effect. The content of the phosphoric acid ester is 6 to 25 parts by mass relative to 100 parts by mass of the resin component. When the content of the phosphoric acid ester is less than 6 parts by mass, flame retardancy is insufficient. When the content of the phosphoric acid ester exceeds 25 parts by mass, the mechanical properties decrease.

A multifunctional monomer functions as a cross-linking aid. A monomer having a plurality of carbon-carbon double bonds in its molecule, such as trimethylolpropane trimethacrylate, triallyl cyanurate, or triallyl isocyanurate, is preferably used as the multifunctional monomer. The multifunctional monomer is preferably liquid at room temperature. Such a liquid multifunctional monomer is easily mixed with a polyphenylene ether-based resin and a styrene-based elastomer. In particular, trimethylolpropane trimethacrylate is preferably used because it has high compatibility with resins. The content of the multifunctional monomer is 1 to 10 parts by mass relative to 100 parts by mass of the resin component. When the content of the multifunctional monomer is less than 1 part by mass, the cross-linking efficiency is low and properties such as heat resistance decrease. When the content of the multifunctional monomer exceeds 10 parts by mass, mechanical properties decrease.

The resin composition may contain an antioxidant, an age resistor, a processing stabilizing agent, a coloring agent, a heavy metal deactivator, and a foaming agent, as required, besides the essential components described above. These materials are mixed using a known melt mixer such as a single-screw extruder, a twin-screw extruder, a pressure kneading machine, or a Banbury mixer to prepare a resin composition. By mixing the above essential components at a specific ratio, a polymer alloy in which a polyphenylene ether-based resin and a styrene-based elastomer are finely dispersed in a high-density polyethylene is obtained. Note that the phrase "finely dispersed" refers to a state where domains each having a submicron size are uniformly dispersed in a matrix. In order to achieve a uniform dispersion, the mixing is preferably performed using a high-shear twin-screw extruder.

An insulated electrical wire includes an insulating layer composed of the resin composition described above, and the insulating layer is formed on a conductor either directly or with another layer therebetween. A known extruder such as a melt extruder can be used for forming the insulating layer. The insulating layer is preferably cross-linked by irradiation with ionizing radiation.

A copper wire, an aluminum wire, and the like having good electrical conductivity can be used as the conductor. The diameter of the conductor can be appropriately selected in accordance with the use. However, in order to achieve wiring in a narrow space, a conductor having a cross-sectional area of 0.35 mm² or less is preferably selected. The conductor may be a single wire or a strand wire including a plurality of wires.

The thickness of the insulating layer can be appropriately selected in accordance with the diameter of the conductor. When the thickness of the insulating layer is 0.24 mm or less, wiring in a narrow portion can be achieved and the resulting insulated electrical wire can be easily handled. The insulating layer of the insulated electrical wire of the present invention has good abrasion resistance. Therefore, even when the insulating layer is such a thin film, the requirements for an electrical wire for automobiles can be satisfied.

The insulating layer is preferably cross-linked by irradiation with ionizing radiation so as to improve its mechanical strength. Examples of an ionizing radiation source include accelerated electron beams, gamma rays, X rays, α rays, and ultraviolet rays. Accelerated electron beams can be most preferably used from the standpoint of industrial use, for example, the simplicity of the use of the radiation source, the transmission thickness of the ionizing radiation, and the speed of the cross-linking process.

### EXAMPLES

Next, the present invention will be described in more detail using Examples. These Examples do not limit the scope of the present invention.

### (Examples 1 to 9 and Comparative Examples 1 to 7)

### (Preparation of resin composition pellets)

Components were mixed so as to have the compositions (unit: parts by mass) shown in Tables I and II. The components were melt-mixed using a twin-screw mixer (45 mmφ, L/D = 42) at a cylinder temperature of 240°C and at a number of screw revolutions of 200 rpm, and the resulting mixture was melt-extruded into strands. Subsequently, the melted strands were cooled and cut to prepare pellets.

### (Preparation of insulated electrical wire)

An insulating layer was extruded on a conductor (strand wire including 19 annealed copper wires each having a diameter of 0.16 mmφ) having a cross-sectional area of 0.35 mm² using a single-screw extruder (30 mmφ, L/D = 24) so as to have a wall thickness of 0.25 mm. Thus, the conductor was coated with the insulating layer. The insulating layer was irradiated with an electron beam at an acceleration voltage of 2 MeV with a dose of 180 to 360 kGy to prepare an insulated electrical wire.

### (Evaluation of insulating layer: Tensile properties)

The conductor was drawn out from the prepared electrical wire, and a tensile test of the insulating layer was conducted. Regarding the test conditions, the tensile speed was 500 mm/min, the distance between marked lines was 25 mm, and the temperature was 23°C. A tensile strength and a tensile elongation (breaking elongation) were each measured using three samples, and the averages thereof were determined. The tensile strength is preferably 10.3 MPa or more, and the tensile elongation is preferably 150% or more.

### (Heat resistance)

Long-term heating, short-term heating, and a thermal overload test were conducted in accordance with ISO 6722. Long-term heating: An insulated electrical wire was left to stand at a temperature of 125°C for 3,000 hours. Subsequently, the insulated electrical wire was wound around a mandrel having a diameter of 1.5 mm for three turns at room temperature, and the absence of visual defects such as cracks was checked. Furthermore, a withstand voltage test of AC 1 kV x 1 minute was conducted. An insulated electrical wire that did not have visual defects such as cracks after the withstand voltage test was evaluated as "acceptable". Short-term heating: An insulated electrical wire was left to stand at a temperature of 150°C for 240 hours. Subsequently, the insulated electrical wire was wound around a mandrel having a diameter of 5 mm for three turns at -25°C, and the absence of visual defects such as cracks was checked. Furthermore, a withstand voltage test of AC 1 kV x 1 minute was conducted. An insulated electrical wire that did not have visual defects such as cracks after the withstand voltage test was evaluated as "acceptable". Overload test: An insulated electrical wire was left to stand at a temperature of 175°C for 6 hours. Subsequently, the insulated electrical wire was wound around a mandrel having a diameter of 1.5 mm for three turns at room temperature, and the absence of visual defects such as cracks was checked. Furthermore, a withstand voltage test of AC 1 kV x 1 minute was conducted. An insulated electrical wire that did not have visual defects such as cracks after the withstand voltage test was evaluated as "acceptable".

### (Abrasion test)

A tape abrasion test and a scrape abrasion test were conducted in accordance with ISO 6722. The tape abrasion test was conducted using 150J garnet sandpaper at a load of 0.1 kg. When the distance the tape moved until the conductor was exposed was 250 mm or more, the insulated electrical wire was evaluated as "acceptable". The scrape abrasion test was conducted using a blade with a diameter of 0.45 mm at a frequency of 50 to 60 Hz and at a load of 7 N. When the number of cycles was 200 or more, the insulated electrical wire was evaluated as "acceptable".

### (Hot-water resistance test)

An insulated electrical wire was wound around a mandrel having a diameter of 5 mm for three turns, and immersed in this state in salt water having a concentration of 10 g/L at a temperature of 85°C. A voltage of DC 48 V was applied, and the insulation resistance was measured once every seven days for five cycles. Furthermore, a withstand voltage test of AC 1 kV x 1 minute was conducted. An insulated electrical wire that did not have visual defects such as cracks after the withstand voltage test was evaluated as "acceptable".

### (Flame retardancy test)

An insulated electrical wire was tilted by 45°, and a flame was brought into contact with the insulated electrical wire for 15 seconds. The time (sec) until the flame expired was then measured. In the case where the flame naturally expired within 70 seconds, the insulated electrical wire was evaluated as "acceptable". In the case where the time exceeded 70 seconds, the insulated electrical wire was evaluated as "unacceptable".

### (Withstand voltage test)

In accordance with ISO 6722, a voltage of AC 1 kV was applied to an insulated electrical wire in water for 30 minutes, and the voltage was then increased to 3 kV. Whether dielectric breakdown occurs or not was examined. When dielectric breakdown did not occur, the insulated electrical wire was evaluated as "acceptable".

### (Low-temperature winding test)

In accordance with ISO 6722, an insulated electrical wire was left to stand in a thermostatic chamber at -40°C for four hours, and then wound around a mandrel with φ 5D (with a diameter five times the outer diameter of the electrical wire) for three turns. A voltage of AC 1 kV was applied to the insulated electrical wire for one minute, and whether dielectric breakdown occurs or not was examined. When dielectric breakdown did not occur, the insulated electrical wire was evaluated as "acceptable".

### (Shrinkage by heat)

In accordance with ISO 6722, an electrical wire sample having a length of 100 mm was placed in a thermostatic chamber at 150°C for 15 minutes. After the sample was taken out from the thermostatic chamber, whether an insulating coating was shrunk or not was examined. When the shrinkage was 2 mm or less, the sample was evaluated as "acceptable".

### (Oil resistance test)

In accordance with ISO 6722, an insulated electrical wire was immersed in oil such as gasoline, light oil, engine oil, ethanol, power steering fluid (PSF), automatic transmission fluid (ATF), or long life coolant (LLC) under the temperature condition of 23°C or 50°C for 20 hours. A rate of change in the outer diameter was calculated. An insulated electrical wire having a rate of change of 15% or less was evaluated as "acceptable". Furthermore, for a sample that was evaluated as "acceptable", the sample was wound around a mandrel with φ 5D at room temperature for three turns, and a voltage of AC 1 kV was applied thereto for one minute. Whether dielectric breakdown occurs or not was examined. When dielectric breakdown did not occur, the sample was evaluated as "acceptable".

### (Battery liquid resistance test)

In accordance with ISO 6722, a battery liquid was dropped on an electrical wire sample, and the sample was left to stand in a thermostatic chamber at 90°C for eight hours. The battery liquid was then again dropped on the sample, and the sample was left to stand for 16 hours. This cycle was repeated twice in total, and the sample was left to stand at room temperature for 30 minutes. Subsequently, a winding test was conducted. When dielectric breakdown did not occur, the sample was evaluated as "acceptable".

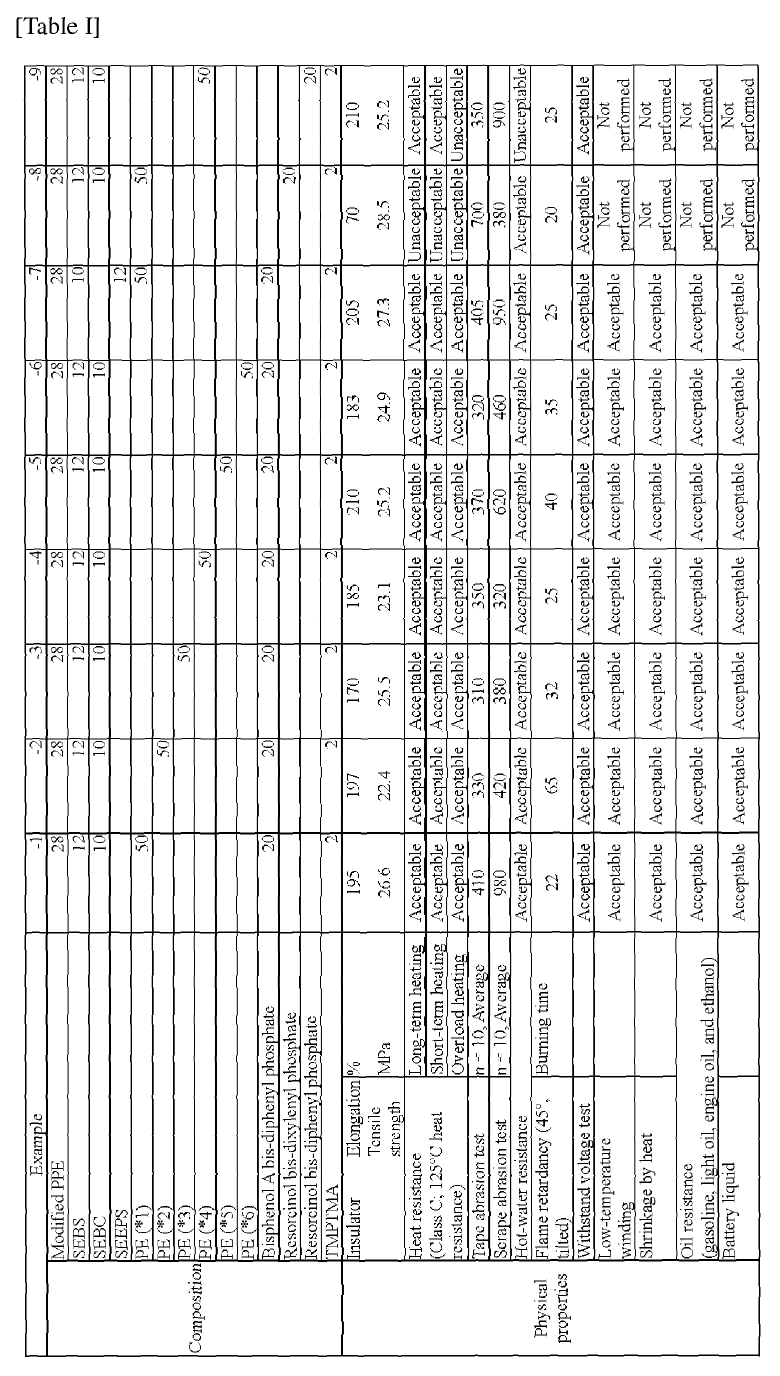

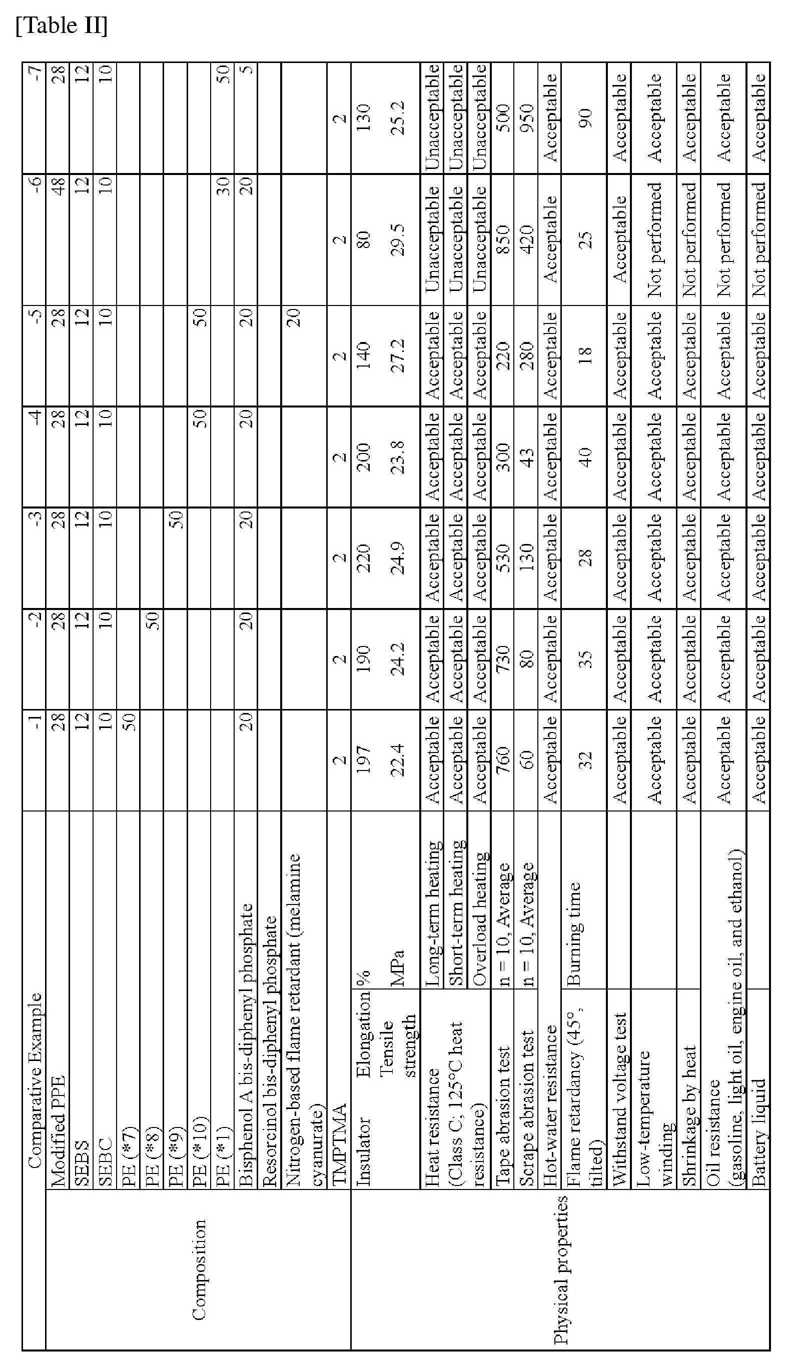

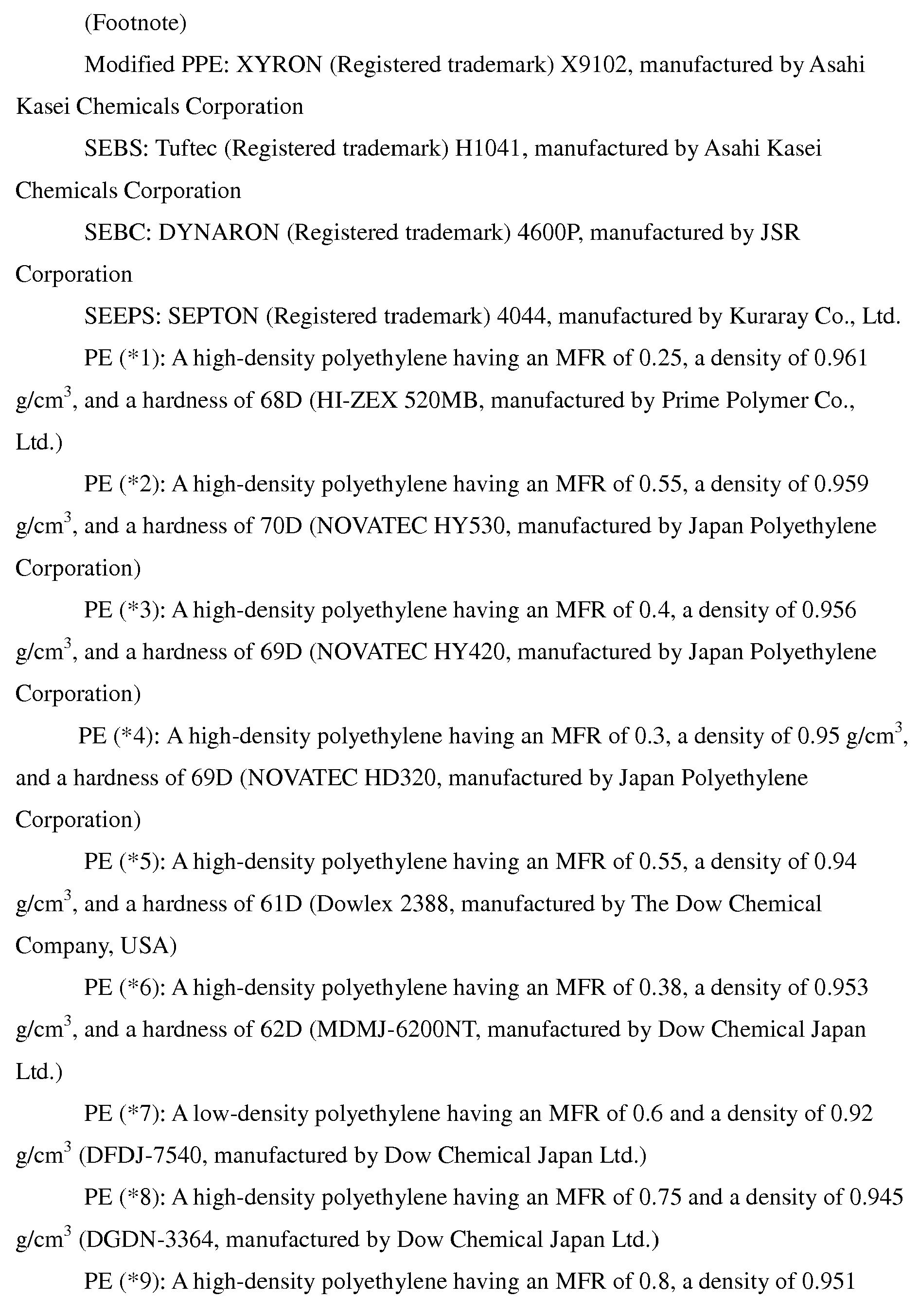

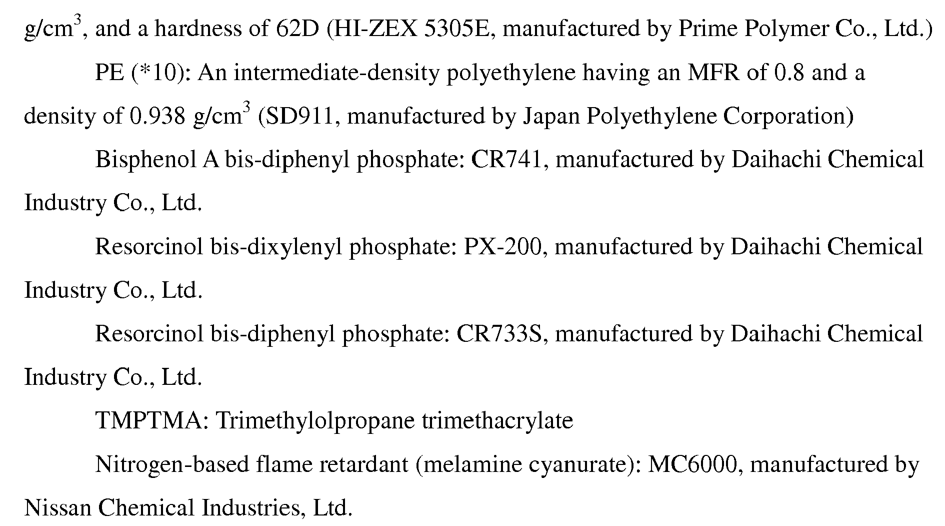

In all the insulated electrical wires of Examples 1 to 7, bisphenol A bis-diphenyl phosphate is used as a phosphoric acid ester. Each of these insulated electrical wires satisfies evaluation items such as heat resistance, abrasion resistance, hot-water resistance, and flame retardancy, has a tensile elongation of 150% or more and a tensile strength of 10.3 MPa or more, and thus has sufficient flexibility. In the insulated electrical wire of Example 8, resorcinol bis-dixylenyl phosphate is used as a phosphoric acid ester. Regarding the abrasion resistance, the results of the tape abrasion test and the scrape abrasion test are each at an acceptable level. However, the tensile elongation is somewhat low; 70%, and thus the flexibility of the insulated electrical wire of Example 8 is somewhat lower than those of the insulated electrical wires of Examples 1 to 7. Heat resistance is also insufficient. In the insulated electrical wire of Example 9, resorcinol bis-diphenyl phosphate is used as a phosphoric acid ester. This insulated electrical wire meets the requirements for abrasion resistance and the flexibility. However, the overload test of heat resistance is unacceptable, and hot-water resistance is also unacceptable. Thus, heat resistance of the insulated electrical wire of Example 9 is somewhat inferior to those of the insulated electrical wires of Examples 1 to 7.

In Comparative Examples 1 to 4, a low-density polyethylene, an intermediate-density polyethylene, and high-density polyethylenes each having a melt flow rate of more than 0.6 are used as polyethylenes. All the insulated electrical wires of Comparative Examples 1 to 4 do not meet the requirements for abrasion resistance. These results show that abrasion resistance is improved by using a high-density polyethylene having a melt flow rate of 0.6 or less.

In Comparative Example 5, an intermediate-density polyethylene is used as a polyethylene and a nitrogen-based flame retardant is used in combination with a phosphorus-based flame retardant. The insulated electrical wire of Comparative Example 5 does not meet the requirements for the tape abrasion test, has an elongation of 140%, and thus has somewhat poor flexibility.

In Comparative Example 6, the content of a high-density polyethylene is low, namely, 30 parts by mass relative to 100 parts by mass of the resins. The insulated electrical wire of Comparative Example 6 does not meet the requirements for the flexibility, heat resistance, and abrasion resistance. It is believed that the reason for this is that since the content of the high-density polyethylene is low, the phase structure of the resin composition is reversed.

In Comparative Example 7, the content of a phosphoric acid ester is 5 parts by mass relative to 100 parts by mass of the resin component. The insulated electrical wire of Comparative Example 7 does not meet the requirements for flame retardancy, and has a tensile elongation of 130%, which is somewhat lower than the desired value. These results show that a phosphoric acid ester, in particular, bisphenol A bis-diphenyl phosphate, which is used in Comparative Example 7, contributes to not only flame retardancy but also the improvement in the flexibility, the improvement being due to an effect of plasticizing resins.

## Claims

1. A halogen-free flame-retardant insulated electrical wire comprising a conductor and an insulating layer that covers the conductor,
wherein the insulating layer is composed of a cross-linked product of a resin composition that contains 6 to 25 parts by mass of a phosphoric acid ester and 1 to 10 parts by mass of a multifunctional monomer relative to 100 parts by mass of a resin component containing 40 to 65 parts by mass of a high-density polyethylene having a melt flow rate of 0.60 or less, 25 to 30 parts by mass of a polyphenylene ether-based resin, and 10 to 30 parts by mass of styrene-based elastomer, the resin component being a polymer alloy in which the polyphenylene ether-based resin and the styrene-based elastomer are finely dispersed in the high-density polyethylene.

2. The halogen-free flame-retardant insulated electrical wire according to Claim 1, wherein the phosphoric acid ester is bisphenol A bis-diphenyl phosphate.

3. The halogen-free flame-retardant insulated electrical wire according to Claim 1 or 2, wherein the high-density polyethylene has a melt flow rate of 0.15 or more and 0.30 or less.

4. The halogen-free flame-retardant insulated electrical wire according to any one of Claims 1 to 3, wherein the resin composition is cross-linked by irradiation with ionizing radiation.

5. The halogen-free flame-retardant insulated electrical wire according to any one of Claims 1 to 4, wherein the conductor has a cross-sectional area of 0.35 mm² or less, and the insulating layer has a thickness of 0.25 mm or less.
